# EUROPEAN PATENT APPLICATION

(11) **EP 4 679 740 A1**
(43) Date of publication of application: **14.01.2026**
(21) Application number: 24777590.1
(22) Date of filing: 26.02.2024
(51) Int. Cl.: H04J 14/02

(54) **COMMUNICATION DEVICE AND OPTICAL COMMUNICATION NETWORK**

(30) Priority: 29.03.2023 CN 202310351201
(71) Applicant: Huawei Technologies Co., Ltd., Shenzhen, Guangdong 518129 (CN)
(72) Inventor: ZHAO, Zhenqing, Shenzhen, Guangdong 518129 (CN); WANG, Guangquan, Beijing 100044 (CN); YIN, Zuxin, Beijing 100044 (CN); LUO, Jun, Shenzhen, Guangdong 518129 (CN); GUAN, Donggen, Shenzhen, Guangdong 518129 (CN)
(74) Representative: Isarpatent
(86) International application number: PCT/CN2024/078544
(87) International publication number: WO 2024/198800

(57) **Abstract**

A communication device and an optical communication network are provided. The communication device includes a first wavelength adding/dropping unit and a first wavelength selective switch WSS. The first wavelength adding/dropping unit is connected to a first common port of the first WSS, and a wavelength adding resource pool signal from the first wavelength adding/dropping unit is input to the first WSS through the first common port. The first WSS includes a plurality of branch ports, and the first WSS is configured to schedule different add wavelength signals in the wavelength adding resource pool signal to corresponding branch ports based on a configuration. The plurality of branch ports are in one-to-one correspondence with a plurality of central office CO site rings, and are configured to transmit corresponding add wavelength signals to the corresponding CO rings.

## Description

This application claims priority to Chinese Patent Application No. CN202310351201.5, filed with the China National Intellectual Property Administration on March 29, 2023 and entitled "COMMUNICATION DEVICE AND OPTICAL COMMUNICATION NETWORK", which is incorporated herein by reference in its entirety.

### TECHNICAL FIELD

Embodiments of this application relate to the field of optical communication, and in particular, to a communication device and an optical communication network.

### BACKGROUND

In one network setting for optical communication, a core site, an aggregation site, and a central office (central office, CO) site ring are included. The aggregation site is configured to implement wavelength adding/dropping of core site signals and CO ring signals, to implement communication between a site in the CO ring and a core site, or between sites in different CO rings (connected to different aggregation sites).

At the aggregation site, a wavelength adding/dropping unit can be used for implementing wavelength adding/dropping of the CO ring signals. Specifically, each CO ring corresponds to a wavelength adding/dropping unit at the aggregation site, and the wavelength adding/dropping unit is configured to implement wavelength adding/dropping of a signal corresponding to the CO ring.

The wavelength adding/dropping unit is disposed in an optical subrack, and the optical subrack is located in a cabinet of the aggregation site. If there is a large quantity of CO rings in a network, a quantity of wavelength adding/dropping units and a quantity of optical subracks at the aggregation site are large. Consequently, the cabinet is large in size and occupies large space.

### SUMMARY

Embodiments of this application provide a communication device, a site, and a network, to improve device integration.

According to a first aspect, an embodiment of this application provides a communication device, where the communication device includes a first wavelength adding/dropping unit and a first wavelength selective switch (wavelength selective switch, WSS). The first wavelength adding/dropping unit is connected to a first common port of the first WSS, and a wavelength adding resource pool signal from the first wavelength adding/dropping unit is input to the first WSS through the first common port. The first WSS includes a plurality of branch ports, and the first WSS is configured to schedule different add wavelength signals in the wavelength adding resource pool signal to corresponding branch ports based on a configuration. In the configuration, different add wavelength signals correspond to different branch ports. The plurality of branch ports are in one-to-one correspondence with a plurality of central office (central office, CO) site rings, and are configured to transmit corresponding add wavelength signals to the corresponding CO rings.

In this embodiment of this application, an add wavelength signal from one or more first wavelength adding/dropping units is constructed into the wavelength adding resource pool signal, and the plurality of branch ports (CO rings) may share the add wavelength signal in the wavelength adding resource pool signal. The plurality of CO rings share the wavelength adding resource pool signal from the first wavelength adding/dropping unit. That is, the plurality of CO rings share the first wavelength adding/dropping unit. This can reduce a quantity of wavelength adding/dropping units for performing wavelength adding/dropping on a CO ring signal in the communication device, thereby reducing space that is of the communication device and that is occupied by the wavelength adding/dropping unit for the CO ring signal, and improving integration.

According to a structure of the communication device provided in this embodiment of this application, a fixed connection manner in which static optical layers of n CO rings corresponds to n wavelength adding/dropping units at an aggregation site is changed to a flexible optical layer that is constructed based on the first wavelength adding/dropping unit and an M*N WSS (the first WSS) and that supports allocation as required, so that the different add wavelength signals in a wavelength adding resource pool can be allocated to different CO rings as required. In this way, centralized allocation and planning of wavelengths of the CO rings are implemented.

In an optional implementation, there is at least one first common port, a wavelength adding resource pool signal input to any one of first common ports includes a plurality of add wavelength signals, and wavelengths of the plurality of add wavelength signals are different.

In this embodiment of this application, the wavelengths of the plurality of add wavelength signals that are input to the same first common port are different. This helps the first WSS selects, for scheduling, the add wavelength signal in the wavelength adding resource pool signal based on the wavelength, to avoid mutual interference between the add wavelength signals.

In an optional implementation, there are a plurality of first common ports, and in the wavelength adding resource pool signal, a first multiplexed signal and a second multiplexed signal are from different first common ports. The first WSS is configured to: schedule different add wavelength signals in the first multiplexed signal to corresponding branch ports based on the configuration; and schedule different add wavelength signals in the second multiplexed signal to corresponding branch ports based on the configuration. In the configuration, different add wavelength signals in the first multiplexed signal correspond to different branch ports, and different add wavelength signals in the second multiplexed signal correspond to different branch ports.

In this embodiment of this application, wavelengths of add wavelength signals from different first common ports are independent of each other (wavelength allocation of the different first common ports does not affect each other), and a wavelength of an add wavelength signal from each first common port may be flexibly set. This improves flexibility of wavelength configuration in a network.

In an optional implementation, the first wavelength adding/dropping unit includes: a plurality of optical channel transport units OTU and at least one first multiplexer/demultiplexer module. The plurality of OTUs are separately configured to obtain an add wavelength signal. The at least one first multiplexer/demultiplexer module is configured to multiplex add wavelength signals from the plurality of OTUs to obtain the wavelength adding resource pool signal.

In an optional implementation, the plurality of OTUs are configured to obtain the add wavelength signals of different wavelengths, and the first multiplexer/demultiplexer module is configured to multiplex the add wavelength signals of different wavelengths to obtain the wavelength adding resource pool signal.

In this embodiment of this application, the wavelengths of the add wavelength signals obtained by the plurality of OTUs are different. In this case, in a wavelength adding resource pool signal obtained by multiplexing the plurality of add wavelength signals, the plurality of add wavelength signals do not interfere with each other (because the wavelengths are different). Therefore, it is ensured that all signals in the wavelength adding resource pool signal are signals whose wavelengths are isolated from each other regardless of whether the signals are on an output port, the first common port, or the first WSS.

In an optional implementation, the first multiplexer/demultiplexer module includes a first output port and a second output port. There are a plurality of first common ports, and the first output port and the second output port are respectively connected to different first common ports.

In this embodiment of this application, wavelengths of add wavelength signals from different output ports of the first multiplexer/demultiplexer module are independent of each other (wavelength allocation of the different first common ports does not affect each other), and a wavelength of an add wavelength signal from each output port may be flexibly set. This improves the flexibility of the wavelength configuration in the network.

In an optional implementation, in the plurality of add wavelength signals obtained by the plurality of OTUs, a wavelength of a first add wavelength signal is the same as a wavelength of a second add wavelength signal. The first add wavelength signal is input to the first WSS through the first output port, and the second add wavelength signal is input to the first WSS through the second output port.

In this embodiment of this application, the first multiplexer/demultiplexer module is connected to the first WSS through a plurality of output ports, and transmission of add wavelength signals of a same wavelength may be performed via different output ports, so that the first multiplexer/demultiplexer module occupies fewer wavelengths, and more remaining wavelengths are used for subsequent network expansion.

In an optional implementation, the at least one first multiplexer/demultiplexer module includes a plurality of first multiplexer/demultiplexer modules, each first multiplexer/demultiplexer module is configured to obtain one path of multiplexed signal, and multiplexed signals from different first multiplexer/demultiplexer modules are separately input to the first WSS through different first common ports.

In this embodiment of this application, the plurality of first multiplexer/demultiplexer modules are connected to the first WSS through different first common ports, and transmission of add wavelength signals of a same wavelength may be performed via the different first multiplexer/demultiplexer modules, so that the first wavelength adding/dropping unit occupies fewer wavelengths, and more remaining wavelengths are used for subsequent network expansion.

In an optional implementation, the first wavelength adding/dropping unit further includes a multiplexer, the at least one first multiplexer/demultiplexer module includes a plurality of first multiplexer/demultiplexer modules, each first multiplexer/demultiplexer module is configured to obtain one path of multiplexed signal, and multiplexed signals from different first multiplexer/demultiplexer modules are multiplexed by the multiplexer and then input to the first WSS through one first common port.

In this embodiment of this application, the signals from the plurality of first multiplexer/demultiplexer modules are multiplexed by the multiplexer and then input to the first WSS from the same first common port, and a quantity of occupied first common ports is small.

In an optional implementation, the first WSS is configured to schedule, to different branch ports based on allocation of a control module, signals that are of a same wavelength and that are from different first common ports.

In this embodiment of this application, for the add wavelength signals of the same wavelength, the signals enter the first WSS 2200 through the different first common ports 2210, so that crosstalk between the signals can be avoided.

In an optional implementation, the device further includes a second WSS and a plurality of third WSSs with different scheduling directions. A plurality of branch ports of the second WSS are configured to be connected to different third WSSs, at least one second common port of the second WSS is connected to at least one third common port of the first WSS, and the second common port and the third common port have a same quantity and are in one-to-one correspondence. In signals from the different third WSSs, a pass-through signal is scheduled by the second WSS to the second common port, and is transmitted to the first WSS. The first WSS is configured to schedule different pass-through wavelength signals in the pass-through signal to corresponding branch ports based on the configuration. In the configuration, different pass-through wavelength signals correspond to different branch ports.

In this embodiment of this application, the second common port is connected to the third common port, so that transmission of a pass-through signal from the second WSS to each CO ring (or a pass-through signal from each CO ring to the second WSS) can be directly performed via the second common port and the third common port. The pass-through signal from the second WSS does not need to be wavelength-dropped, at the OTU, and wavelength-added for transmission to each CO ring (or the pass-through signal from each CO ring is wavelength-dropped, at the OTU, and wavelength-added for transmission to the second WSS), thereby avoiding a need of performing wavelength dropping on the pass-through signal at a local site and then performing wavelength adding, saving a quantity of OTUs, and reducing a transmission delay of the pass-through signal.

In addition, the quantity of OTUs required for performing wavelength adding/dropping on the pass-through signal is saved for direct pass-through, so that a quantity of OTUs in the communication device may be reduced, and structure complexity may be reduced. In addition, a plurality of CO rings share a pass-through port (the third common port) through the first WSS, so that the plurality of CO rings may share a pass-through signal from each third WSS, and there is no need to independently set a pass-through port for each CO ring. This can reduce a quantity of pass-through ports and reduce fiber connection complexity, so that the structure of the communication device is simplified.

In an optional implementation, there is at least one third common port, the pass-through signal input to any third common port includes a plurality of pass-through wavelength signals, and wavelengths of the plurality of pass-through wavelength signals are different.

In this embodiment of this application, the wavelengths of the plurality of pass-through wavelength signals that are input to the same third common port are different. This helps the first WSS selects, for scheduling, the pass-through wavelength signal in the pass-through signal based on the wavelength, to avoid mutual interference between the pass-through wavelength signals.

In an optional implementation, there are a plurality of third common ports, and in the pass-through signals, a first pass-through signal and a second pass-through signal are from different second common ports. The first WSS is configured to: schedule different pass-through wavelength signals in the first pass-through signal to corresponding branch ports based on the configuration; and schedule different pass-through wavelength signals in the second pass-through signal to corresponding branch ports based on the configuration. In the configuration, different pass-through wavelength signals in the first pass-through signal correspond to different branch ports, and different pass-through wavelength signals in the second pass-through signal correspond to different branch ports.

In this embodiment of this application, wavelengths of pass-through wavelength signals from different third common ports are independent of each other (wavelength allocation of the different third common ports does not affect each other), and a wavelength of a pass-through wavelength signal of each third common port may be flexibly set. This improves the flexibility of the wavelength configuration in the network.

In an optional implementation, the communication device further includes a second wavelength adding/dropping unit. A fourth common port of the second wavelength adding/dropping unit is connected to a fifth common port of the second WSS. The signals from the different third WSSs include a wavelength dropping signal, the wavelength dropping signal is input to the second wavelength adding/dropping unit through the fifth common port and the fourth common port, and the second wavelength adding/dropping unit is configured to: divide the wavelength dropping signal into a plurality of paths of signals, and transmit different paths of wavelength dropping signals through different branch ports.

According to a second aspect, an embodiment of this application further provides an optical communication network, including the communication device according to the first aspect and a plurality of central office CO site rings. The plurality of CO rings are connected to different branch ports of a first WSS in the communication device, and the plurality of CO rings include at least one target site.

In an optional implementation, a wavelength dropping unit of the target site is a splitter, and a wavelength adding unit of the target site is a coupler.

In an optional implementation, both a wavelength adding unit and a wavelength dropping unit of the target site are cascaded filter units.

In an optional implementation, a wavelength adding unit and a wavelength dropping unit of the target site are optical add-drop multiplexers OADM.

### BRIEF DESCRIPTION OF DRAWINGS

FIG. 1 is a diagram of a network architecture according to this application;
FIG. 2 is a diagram of a structure of a communication device according to an embodiment of this application;
FIG. 3 is a diagram of a structure of a communication device including a plurality of first common ports according to an embodiment of this application;
FIG. 4 is a diagram of a structure of a first wavelength adding/dropping unit according to an embodiment of this application;
FIG. 5 is a diagram of a structure of a first wavelength adding/dropping unit including a plurality of output ports according to an embodiment of this application;
FIG. 6 is a diagram of a structure of a first wavelength adding/dropping unit including a plurality of first multiplexer/demultiplexer modules according to an embodiment of this application;
FIG. 7 is a diagram of a structure of a first wavelength adding/dropping unit including a multiplexer according to an embodiment of this application;
FIG. 8 is a diagram of a structure of a first multiplexer/demultiplexer module according to an embodiment of this application;
FIG. 9 is a diagram of another structure of a first multiplexer/demultiplexer module according to an embodiment of this application;
FIG. 10 is a diagram of another structure of a first multiplexer/demultiplexer module according to an embodiment of this application;
FIG. 11 is a diagram of another structure of a first multiplexer/demultiplexer module according to an embodiment of this application;
FIG. 12 is a diagram of another structure of a first multiplexer/demultiplexer module according to an embodiment of this application;
FIG. 13 is a diagram of a structure of a communication device including a third common port according to an embodiment of this application;
FIG. 14 is a diagram of a structure of a communication device including a plurality of third common ports according to an embodiment of this application;
FIG. 15 is a diagram of a structure of a communication device including a second wavelength adding/dropping unit according to an embodiment of this application;
FIG. 16 is a diagram of a structure of an optical communication network according to an embodiment of this application;
FIG. 17 is a diagram of a structure of a target site according to an embodiment of this application;
FIG. 18 is a diagram of another structure of a target site according to an embodiment of this application;
FIG. 19 is a diagram of another structure of a target site according to an embodiment of this application; and
FIG. 20 is a diagram of another structure of a target site according to an embodiment of this application.

### DESCRIPTION OF EMBODIMENTS

The following describes embodiments of this application with reference to accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device. In addition, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

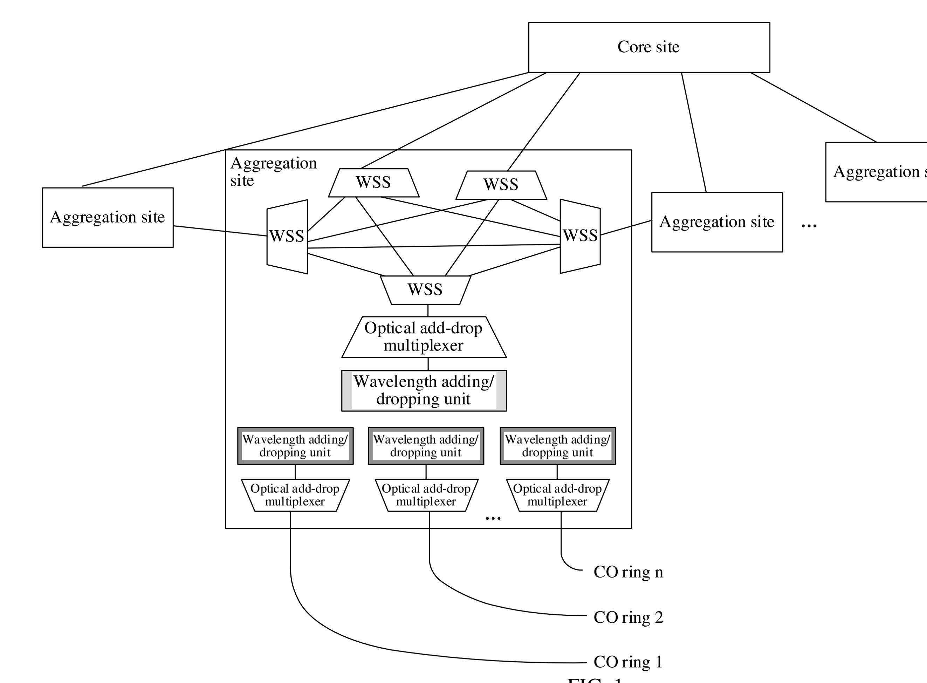

In an optical communication network, a commonly used architecture is a network topology structure: core+aggregation+CO ring. As shown in FIG. 1, a plurality of aggregation sites are connected to a core site, and a plurality of CO rings are connected to the aggregation site, to implement aggregation and transmission of CO ring signals. Specifically, signals from different CO ring sites may be aggregated into a plurality of paths of signals via an aggregation site. Some of the plurality of paths of signals are transmitted to another aggregation site (to be transmitted to a CO ring site connected to the aggregation site), and some of the plurality of paths of signals are transmitted to the core site.

The aggregation site implements wavelength adding/dropping of the CO ring signal by using a wavelength adding/dropping unit (also referred to as an optical channel transport unit (optical channel transport unit, OTU)). Specifically, the aggregation site includes a plurality of wavelength adding/dropping units, and each wavelength adding/dropping unit (a dark gray wavelength adding/dropping unit in the figure) is connected to one CO ring direction, and is configured to perform wavelength adding/dropping on a signal in a CO ring direction. Wavelength dropping is performed on a signal from a CO ring site at the wavelength adding/dropping unit (the dark gray wavelength adding/dropping unit in the figure), then wavelength adding is performed on the signal by another wavelength adding/dropping unit (a light gray wavelength adding/dropping unit in the figure), and the signal is transmitted to a next transmission node (for example, to a direction of another CO ring, another aggregation site, or the core site). Similarly, wavelength adding needs to be performed on signals transmitted from the aggregation site to each CO ring by the dark gray wavelength adding/dropping unit, and then the signals are input to corresponding CO rings.

That is, in the network topology: core+aggregation+CO ring, the aggregation site needs to configure a wavelength adding/dropping unit in each CO ring direction, to perform wavelength adding/dropping on signals of the plurality of CO rings. An independent wavelength adding/dropping unit is used for each CO ring to perform wavelength adding/dropping. Consequently, excessively large space of a communication device is occupied, and integration is poor. In addition, wavelength dropping needs to be performed on a service from the core site to the CO ring at the aggregation site, and then wavelength adding is performed on the service. Consequently, a fiber connection is complex, a quantity of OTUs is large, and costs are high.

To resolve the foregoing problems, embodiments of this application provide a communication device and an optical communication network. Wavelength adding/dropping scheduling of a plurality of CO ring signals is implemented by using a WSS. In this way, integration of an aggregation site is improved, and a cabinet size and complexity of a connection structure are reduced.

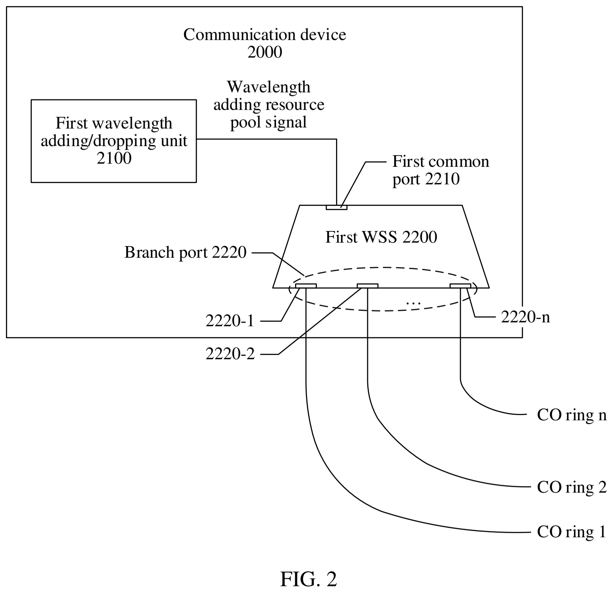

As shown in FIG. 2, a communication device 2000 provided in an embodiment of this application includes a first wavelength adding/dropping unit 2100 and a first WSS 2200. The first wavelength adding/dropping unit 2100 is connected to a first common port 2210 of the first WSS 2200 (in this embodiment of this application, the common port is also referred to as a shared port). The first WSS 2200 includes a plurality of branch ports 2220, and the plurality of branch ports 2220 are in one-to-one correspondence with a plurality of CO rings. Each branch port 2220 is configured to be connected to a corresponding CO ring, to implement signal transmission between different branch ports 2220 and corresponding CO rings. For example, as shown in FIG. 2, branch ports 2220-1, 2220-2, and 2220-n are respectively connected to a CO ring 1, a CO ring 2, and a CO ring n.

In this embodiment of this application, unless otherwise specified, a port represents a pair of ports in a wavelength adding/dropping direction. For example, the first common port 2210 is actually a pair of ports, and the pair of ports are respectively configured to transmit signals in a wavelength adding direction and a wavelength dropping direction. Any branch port (for example, the branch port 2220-1) in the branch ports 2220 is actually a pair of branch ports, and the pair of ports are respectively configured to transmit signals in the wavelength adding/dropping direction.

In this embodiment of this application, the wavelength adding direction is a direction from the first wavelength adding/dropping unit 2100 to the first WSS 2200, and the wavelength dropping direction is a direction from the first WSS 2200 to the first wavelength adding/dropping unit 2100.

In this embodiment of this application, a quantity of first wavelength adding/dropping units 2100 is not limited, and a quantity of first common ports 2210 is not limited. Optionally, one first common port 2210 may be connected to one or more first wavelength adding/dropping units 2100. This is not limited in this application.

Optionally, the first wavelength adding/dropping unit 2100 may be integrated on an optical board of the communication device 2000.

Optionally, the communication device 2000 may be the aggregation site communication device shown in FIG. 1 (therefore, the communication device 2000 may also be referred to as an aggregation site 2000), or may be a secondary core site, a core site, or the like. This is not limited in this application. The communication device 2000 provided in this embodiment of this application may alternatively be used in another network architecture, for example, a network topology: core+aggregation ring, or a network topology: core+aggregation+chain. This is not limited in this application.

In this embodiment of this application, the first wavelength adding/dropping unit 2100 is configured to implement wavelength adding/dropping of a plurality of CO ring signals, and the first WSS 2200 is configured to schedule the plurality of CO ring signals. The following uses the wavelength adding direction as an example to describe a signal flow direction and functions of each component. As shown in FIG. 2, a wavelength adding resource pool signal from the first wavelength adding/dropping unit 2100 is input to the first WSS 2200 through the first common port 2210.

In this embodiment of this application, a sum of signals that are from the one or more first wavelength adding/dropping units 2100 and that are input to the first WSS 220 through one or more first common ports 2210 is referred to as the wavelength adding resource pool signal. A signal in a wavelength adding resource pool is also referred to as an add wavelength signal, and the add wavelength signal is transmitted to a corresponding branch port 2220 (CO ring) based on scheduling by the first WSS 2200.

The wavelength adding resource pool signal is a signal pool shared by the plurality of CO rings, and the signal pool includes a plurality of wavelength adding signals. The plurality of wavelength adding signals may enter the first WSS 2200 through the one or more first common ports 2210. Signals in the wavelength adding direction (or signals in a wavelength dropping direction) on a same first common port 2210 have different frequencies. Signals in the wavelength adding direction (or signals in a wavelength dropping direction) on different first common ports 2210 may have a same frequency or may have different frequencies.

The signals are transmitted to different branch ports 2220 based on distribution by the first WSS 2200. In this way, the plurality of CO rings (branch ports 2220) share (one or more) light source pools constructed by the first wavelength adding/dropping unit 2100, and there is no need to use an independent wavelength adding/dropping unit for each CO ring.

In a structure of the communication device 2000 provided in this embodiment of this application, add wavelength signals from the one or more first wavelength adding/dropping units 2100 are constructed into the wavelength adding resource pool signal, and the plurality of branch ports 2220 (CO rings) may share the add wavelength signals in the wavelength adding resource pool signal. The plurality of CO rings share the wavelength adding resource pool signal from the first wavelength adding/dropping unit 2100. That is, the plurality of CO rings share the first wavelength adding/dropping unit 2100. This can reduce a quantity of wavelength adding/dropping units for performing wavelength adding/dropping on a CO ring signal in the communication device, thereby reducing space that is of the communication device and that is occupied by the wavelength adding/dropping unit for the CO ring signal, and improving integration.

According to the structure of the communication device 2000 provided in this embodiment of this application, a fixed connection manner in which static optical layers of n CO rings corresponds to n wavelength adding/dropping units at the aggregation site is changed to a flexible optical layer that is constructed based on the first wavelength adding/dropping unit 2100 and an M*N WSS (the first WSS 2200) and that supports allocation as required, so that different add wavelength signals in the wavelength adding resource pool can be allocated to different CO rings as required. In this way, centralized allocation and planning of wavelengths of the CO rings are implemented.

Specifically, in the wavelength adding resource pool signal, wavelengths of add wavelength signals input to a same first common port 2210 are different. The first WSS 2200 may schedule different add wavelength signals in the wavelength adding resource pool signal to corresponding branch ports 2220 based on a configuration. In the configuration, different add wavelength signals correspond to different branch ports.

In this embodiment of this application, the foregoing configuration may be a channel planning instruction delivered by main control software to the first WSS 2200, and is used for implementing scheduling of a wavelength to a corresponding branch port (CO ring). Optionally, the foregoing configuration may be an instruction of another type. This is not limited in this application. For example, the foregoing configuration may alternatively be a service planning and design delivered by management software to the first WSS 2200, and is used for implementing scheduling of different services (carried in the different add wavelength signals) to corresponding branch ports (CO rings). For example, if the wavelength adding resource pool signal includes add wavelength signals whose wavelengths are λ1 to λm, and the plurality of add wavelength signals are input to the first WSS 2200 through a same first common port 2210, different add wavelengths may be configured for different branch ports 2220, and a corresponding add wavelength signal in the wavelength adding resource pool signal is scheduled to a port. For example, an add wavelength λ1 may be configured for the branch port 2220-1, an add wavelength λ2 may be configured for the branch port 2220-2, an add wavelength λn may be configured for the branch port 2220-n, and add wavelength signals of the corresponding wavelengths in the wavelength adding resource pool signal are scheduled to the corresponding branch ports 2220.

Signal transmission in the wavelength dropping direction is similar to that in the wavelength adding direction, and details are not described herein.

In this embodiment of this application, the plurality of CO rings share the wavelength adding resource pool signal from the first wavelength adding/dropping unit 2100. That is, the plurality of CO rings share the first wavelength adding/dropping unit 2100. This can reduce the quantity of wavelength adding/dropping units for implementing wavelength adding/dropping of the CO ring signal in the communication device, so that the quantity of wavelength adding/dropping units is reduced, a quantity of communication devices is reduced, the integration is improved, and smaller equipment room space may be occupied.

Optionally, the first wavelength adding/dropping unit 2100 may be a fixed optical add/drop multiplexer (fixed optical add/drop multiplexer, FOADM), a reconfigurable optical add/drop multiplexer (reconfigurable optical add/drop multiplexer, ROADM), or the like. The first WSS 2200 may be an add/drop wavelength selective switch (add/drop wavelength selective switch, ADWSS), an M*N WSS, or the like. This is not limited in this application.

Optionally, there may be one or more first common ports 2210. This is not limited in this application. For each first common port 2210, a wavelength adding resource pool signal input to the port includes a plurality of add wavelength signals, and wavelengths of the plurality of add wavelength signals are different. For add wavelength signals of a same wavelength, the signals enter the first WSS 2200 through different first common ports 2210, so that crosstalk between the signals can be avoided.

If there are a plurality of first common ports 2210, the first WSS 2200 may separately schedule multiplexed signals from the different first common ports 2210. Optionally, there may be two first common ports 2210, four first common ports 2210, eight first common ports 2210, 16 first common ports 2210, 32 first common ports 2210, or the like. This is not limited in this application. The following describes a structure of the plurality of first common ports 2210 by using an example in which there are two first common ports 2210.

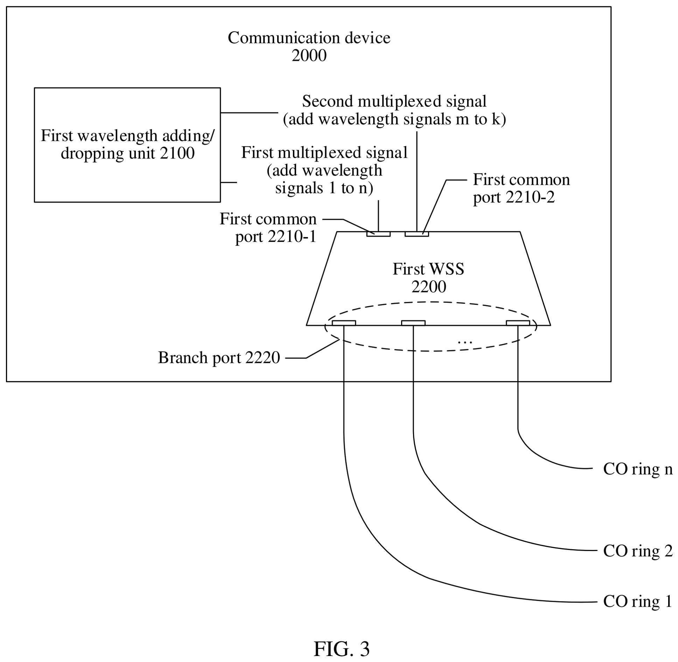

As shown in FIG. 3, a wavelength adding resource pool signal includes a first multiplexed signal and a second multiplexed signal. The first multiplexed signal is from a first common port 2210-1 and includes add wavelength signals 1 to n. The second multiplexed signal is from a first common port 2210-2 and includes add wavelength signals m to k. In this case, a first WSS 2200 may schedule different add wavelength signals in the first multiplexed signal to corresponding branch ports based on a configuration, and schedule different add wavelength signals in the second multiplexed signal to corresponding branch ports based on the configuration. In the configuration, different add wavelength signals in the first multiplexed signal correspond to different branch ports, and different add wavelength signals in the second multiplexed signal correspond to different branch ports.

Because the first multiplexed signal and the second multiplexed signal are separately input to the first WSS 2200 from different first common ports 2210, the first WSS 2200 that performs wavelength-based scheduling may separately perform wavelength-adding scheduling on the first multiplexed signal and the second multiplexed signal, and the scheduling does not affect each other. Therefore, wavelength distribution of the first multiplexed signal and wavelength distribution of the second multiplexed signal (of the add wavelength signals) are independent of each other and do not affect each other.

Specifically, add wavelength signals from different first common ports may include add wavelength signals of a same wavelength, or may include add wavelength signals of different wavelengths. This is not limited in this application. For example, the first multiplexed signal from the first common port 2210-1 includes the add wavelength signals 1 to n, and the second multiplexed signal from the first common port 2210-2 includes the add wavelength signals m to k. A wavelength of the add wavelength signal 1 is the same as a wavelength of the add wavelength signal m, and a wavelength of the add wavelength signal n is different from a wavelength of the add wavelength signal k. This is not limited in this application.

In this embodiment of this application, wavelengths of the add wavelength signals from different first common ports 2210 are independent of each other (wavelength allocation of the different first common ports does not affect each other), and a wavelength of an add wavelength signal from each first common port 2210 may be flexibly set. This improves flexibility of wavelength configuration in a network.

In this embodiment of this application, provided that in a network setting process, it is ensured that wavelengths of signals input to a same branch port 2220 are different (to be specific, the wavelengths of the signals input to the same branch port 2220 through different first common ports 2210 are different), interference between the signals is not caused.

For example, the first multiplexed signal may include add wavelength signals 1 to 3, which are respectively used for carrying an audio signal 1, a video signal 1, and a call signal 1; and the second multiplexed signal includes add wavelength signals 4 to 6, which are respectively used for carrying a video signal 2, a video signal 3, and an image signal 1. If it is determined that the add wavelength signal 1 (carrying the audio signal 1) and the add wavelength signal 4 (carrying the video signal 2) are to be scheduled to a same CO ring (branch port 2220), in the network setting process, a wavelength of the add wavelength signal 1 and a wavelength of the add wavelength signal 4 should be set to be different.

Optionally, the communication device 2000 may further include a control module. The control module is configured to control wavelength-adding scheduling performed by the first WSS 2200 on the add wavelength signal. The control module may obtain a wavelength signal of each add wavelength signal from each first common port 2210, and control the first WSS to schedule, to different branch ports 2220, signals of a same wavelength from different first common ports 2210. Optionally, the control module may be a control module of the first WSS 2200, and is configured to implement wavelength scheduling. In this embodiment of this application, for the add wavelength signals of the same wavelength, the signals enter the first WSS 2200 through the different first common ports 2210, so that crosstalk between the signals can be avoided.

Optionally, the control module may be inside the first WSS 2200, may be inside the first wavelength adding/dropping unit 2100, or may be independent of the first WSS 2200 and the first wavelength adding/dropping unit 2100. This is not limited in this application.

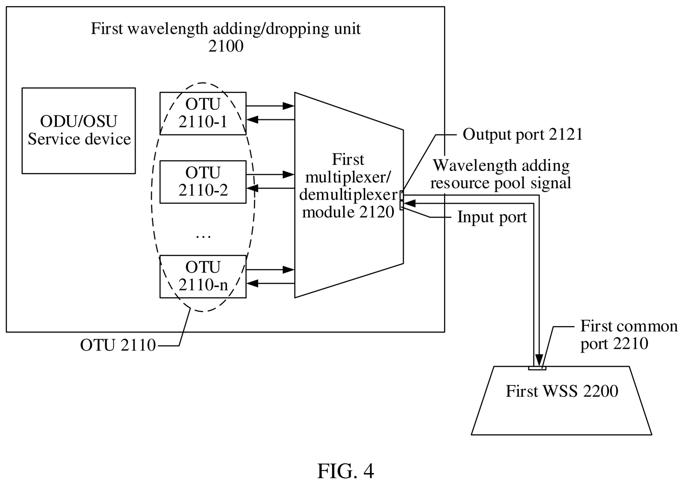

In this embodiment of this application, the first wavelength adding/dropping unit 2100 may include various structures, and details are described below. As shown in FIG. 4, the first wavelength adding/dropping unit 2100 includes a plurality of optical channel transport units (optical channel transport units, OTUs) 2110 and a first multiplexer/demultiplexer module 2120. The OTU 2110 is configured to obtain an add wavelength signal, and the first multiplexer/demultiplexer module 2120 is configured to multiplex add wavelength signals from the plurality of OTUs, to obtain a wavelength adding resource pool signal.

Optionally, the first multiplexer/demultiplexer module 2120 may include a plurality of structures. For example, the first multiplexer/demultiplexer module 2120 may include one or more output ports 2121, there are a plurality of first multiplexer/demultiplexer modules 2120, and a plurality of first multiplexer/demultiplexer modules 2120 are coupled to a same first common port 2210. Details are separately described below.
1. The first multiplexer/demultiplexer module 2120 includes one output port.

Optionally, the first multiplexer/demultiplexer module 2120 may include one or more output ports 2121, and the output ports 2121 are configured to be connected to a corresponding quantity of first common ports 2120.

Actually, there is an input port corresponding to the output port. The output port is configured to implement signal transmission in the direction from the first wavelength adding/dropping unit 2100 to the first WSS 2200, and the input port is configured to implement signal transmission in the direction from the first WSS 2200 to the first wavelength adding/dropping unit 2100. For descriptions of the input port, refer to the descriptions of output port. Details are not described herein.

As shown in FIG. 4, if the first multiplexer/demultiplexer module 2120 includes one output port 2121, wavelengths of the add wavelength signals obtained by the plurality of OTUs 2110 are different, and the first multiplexer/demultiplexer module 2120 may multiplex the add wavelength signals of the different wavelengths, to obtain a wavelength adding resource pool signal. The wavelength adding resource pool signal is input to the first WSS 2200 through the output port 2121 and the first common port 2210.

In this embodiment of this application, the wavelengths of the add wavelength signals obtained by the plurality of OTUs 2110 are different. In this case, in the wavelength adding resource pool signal obtained by multiplexing the plurality of add wavelength signals, the plurality of add wavelength signals do not interfere with each other (because the wavelengths are different). Therefore, it is ensured that all the signals in the wavelength adding resource pool signal are signals whose wavelengths are isolated from each other regardless of whether the signals are on the output port 2121, the first common port 2210, or the first WSS 2200.

Optionally, as shown in FIG. 4, the first wavelength adding/dropping unit 2100 may further include an oracle database unloader (oracle database unloader, ODU)/OSU or a service device, and these devices are service side devices.

2. The first multiplexer/demultiplexer module 2120 includes a plurality of output ports.

If the first multiplexer/demultiplexer module 2120 includes a plurality of output ports 2121, different output ports 2121 are connected to different first common ports 2210. Optionally, there may be two output ports 2121, four output ports 2121, eight output ports 2121, 16 output ports 2121, 32 output ports 2121, or the like. This is not limited in this application. The following describes a structure of a plurality of output ports 2121 by using an example in which there are two output ports.

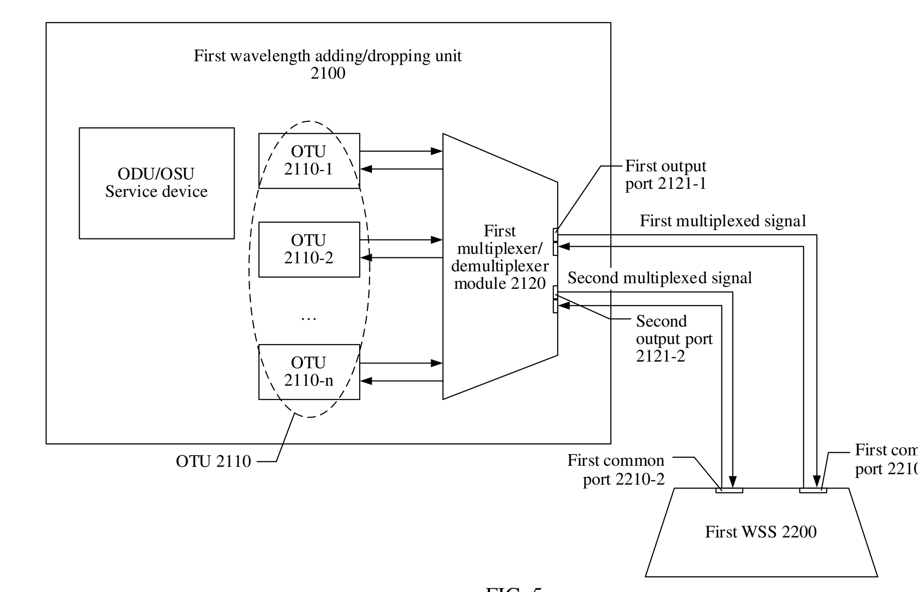

For example, as shown in FIG. 5, the plurality of output ports 2121 include a first output port 2121-1 and a second output port 2121-2, and the first output port 2121-1 and the second output port 2121-2 are respectively connected to a first common port 2210-1 and a first common port 2210-2.

Optionally, if the add wavelength signals obtained by the plurality of OTUs 2110 are input to a same output port 2121, wavelengths of the add wavelength signals obtained by the plurality of OTUs 2110 are different. The first multiplexer/demultiplexer module 2120 may multiplex the add wavelength signals of the different wavelengths to obtain one path of multiplexed signal, and the one path of multiplexed signal is output from the output port 2121.

For example, in FIG. 5, wavelengths of add wavelength signals obtained by an OTU 2110-1 and an OTU 2110-2 are different from each other, and both the add wavelength signals are input to the first output port 2121-1. In this case, the first multiplexer/demultiplexer module 2120 may multiplex the add wavelength signals obtained by the OTU 2110-1 and the OTU 2110-2 to obtain a first multiplexed signal, and output the first multiplexed signal through the first output port 2121-1.

Add wavelength signals from different output ports of the first multiplexer/demultiplexer module 2120 may include add wavelength signals of a same wavelength, or may include add wavelength signals of different wavelengths. This is not limited in this application. For example, the first multiplexed signal from the first output port 2121-1 includes add wavelength signals 1 to n, and a second multiplexed signal from the second output port 2121-2 includes add wavelength signals m to k. A wavelength of the add wavelength signal 1 is the same as a wavelength of the add wavelength signal m, and a wavelength of the add wavelength signal n is different from a wavelength of the add wavelength signal k. This is not limited in this application.

In this embodiment of this application, wavelengths of the add wavelength signals from different output ports of the first multiplexer/demultiplexer module 2120 are independent of each other (wavelength allocation of different first common ports does not affect each other), and a wavelength of an add wavelength signal from each output port may be flexibly set. This improves flexibility of wavelength configuration in a network.

If the plurality of add wavelength signals obtained by the plurality of OTUs 2110 include two paths of add wavelength signals of a same wavelength, the two paths of add wavelength signals are input to the first WSS 2200 through different output ports 2121, so that the first WSS 2200 performs scheduling separately, to avoid crosstalk between the signals. For example, as shown in FIG. 5, if a wavelength of a first add wavelength signal obtained by the OTU 2110-1 is the same as a wavelength of a second add wavelength signal obtained by the OTU 2110-2, and the first add wavelength signal is input to the first WSS 2200 through the first output port 2121-1, the second add wavelength signal is input to the first WSS 2200 through the second output port 2121-2, to avoid signal crosstalk caused because transmission of the second add wavelength signal and transmission of the first add wavelength signal are performed via a same port.

Actually, there is an input port corresponding to the output port. The output port is configured to implement signal transmission in the direction from the first wavelength adding/dropping unit 2100 to the first WSS 2200, and the input port is configured to implement signal transmission in the direction from the first WSS 2200 to the first wavelength adding/dropping unit 2100. For descriptions of the input port, refer to the descriptions of output port. Details are not described herein.

In this embodiment of this application, the first multiplexer/demultiplexer module 2120 is connected to the first WSS through the plurality of output ports 2121, and transmission of the add wavelength signals of the same wavelength may be performed via different output ports 2121, so that the first multiplexer/demultiplexer module 2120 occupies fewer wavelengths, and more remaining wavelengths are used for subsequent network expansion.

For example, the OTU 2110 outputs a total of 10 add wavelength signals. If the first output port 2121-1 and the second output port 2121-2 each perform transmission of five add wavelength signals of wavelengths, and in terms of wavelengths, the five add wavelength signals of wavelengths and transmitted to the first output port are the same as the five add wavelength signals of wavelengths and transmitted to the second output port, the entire first multiplexer/demultiplexer module 2120 occupies only five wavelengths. In comparison with a structure of the first multiplexer/demultiplexer module 2120 with a single output port, a quantity of occupied wavelengths may be reduced, and more remaining wavelengths are used for subsequent network expansion.

3. The first wavelength adding/dropping unit 2100 includes a plurality of first multiplexer/demultiplexer modules 2120.

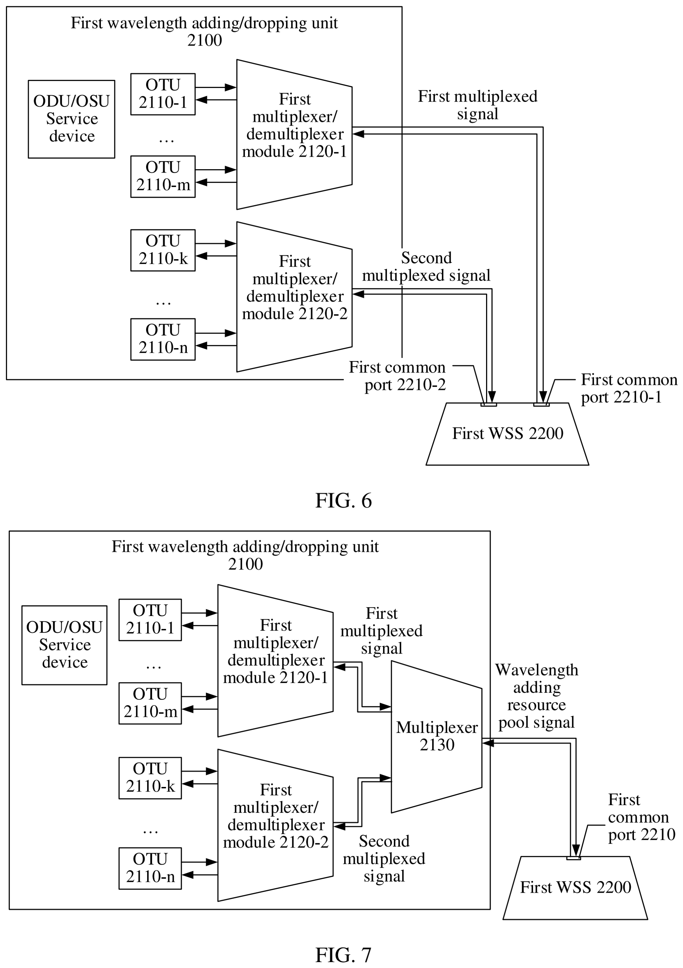

Optionally, as shown in FIG. 6, the first wavelength adding/dropping unit 2100 may alternatively include a plurality of first multiplexer/demultiplexer modules 2120. Each first multiplexer/demultiplexer module 2120 is configured to obtain one path of multiplexed signal, and multiplexed signals from different first multiplexer/demultiplexer modules 2120 are separately input to the first WSS 2200 through different first common ports.

For example, in FIG. 6, an OTU 2110-1 to an OTU 2110-m are all connected to a first multiplexer/demultiplexer module 2120-1, and the first multiplexer/demultiplexer module 2120-1 is configured to multiplex add wavelength signals obtained by the OTU 2110-1 to the OTU 2110-m, to obtain a first multiplexed signal. An OTU 2110-k to an OTU 2110-n are all connected to a first multiplexer/demultiplexer module 2120-2, and the first multiplexer/demultiplexer module 2120-2 is configured to multiplex add wavelength signals obtained by the OTU 2110-k to the OTU 2110-n, to obtain a second multiplexed signal. The first multiplexed signal is input to the first WSS 2200 from a first common port 2210-1, and the second multiplexed signal is input to the first WSS 2200 from a first common port 2210-2.

Add wavelength signals from different first multiplexer/demultiplexer modules 2120 may include add wavelength signals of a same wavelength, or may include add wavelength signals of different wavelengths. This is not limited in this application. For example, the first multiplexed signal from the first multiplexer/demultiplexer module 2120-1 includes add wavelength signals 1 to n, and the second multiplexed signal from the second multiplexer/demultiplexer module 2120-2 includes add wavelength signals m to k. A wavelength of the add wavelength signal 1 is the same as a wavelength of the add wavelength signal m, and a wavelength of the add wavelength signal n is different from a wavelength of the add wavelength signal k. This is not limited in this application.

Optionally, in a structure of the plurality of first multiplexer/demultiplexer modules 2120 shown in FIG. 6, the first multiplexer/demultiplexer module 2120 may include one output port 2121, or may include a plurality of output ports 2121, as shown in FIG. 6. This is not limited in this application. For a structure of a first multiplexer/demultiplexer module 2120 including a plurality of output ports 2121, refer to the descriptions of the embodiment shown in FIG. 5. Details are not described herein.

In this embodiment of this application, the plurality of first multiplexer/demultiplexer modules 2120 are connected to the first WSS 2200 through different first common ports 2210, so that signal transmission, wavelength allocation, and the like between the first multiplexer/demultiplexer modules 2120 do not affect each other. In this way, more paths of add wavelength signals can be supported. For example, if each first multiplexer/demultiplexer module 2120 may support x paths of add wavelength signals, because the signal transmission, the wavelength allocation, and the like between the first multiplexer/demultiplexer modules 2120 do not affect each other, y first multiplexer/demultiplexer modules 2120 may support x*y paths of add wavelength signals.

In this embodiment of this application, the plurality of first multiplexer/demultiplexer modules 2120 are connected to the first WSS 2200 through different first common ports 2210, and transmission of the add wavelength signals of the same wavelength may be performed via the different first multiplexer/demultiplexer modules 2120, so that the first wavelength adding/dropping unit 2100 occupies fewer wavelengths, and more remaining wavelengths are used for subsequent network expansion.

In this embodiment of this application, if the plurality of first multiplexer/demultiplexer modules 2120 each have a plurality of output ports, there may be more add wavelength signals of a same wavelength in a wavelength adding resource pool signal, so that the wavelength occupation is further reduced. Specifically, inside each first multiplexer/demultiplexer module 2120, transmission of a add wavelength signals of a same wavelength may be performed via (at most) a output ports. Between the plurality of first multiplexer/demultiplexer modules 2120, transmission of a*b add wavelength signals of the wavelength may be performed via b first multiplexer/demultiplexer modules 2120, to further reduce the wavelength occupation.

4. In the first wavelength adding/dropping unit 2100, a plurality of first multiplexer/demultiplexer modules 2120 are coupled to a same first common port 2210.

Optionally, as shown in FIG. 7, the first wavelength adding/dropping unit 2100 may further include a multiplexer 2130. Multiplexed signals from different first multiplexer/demultiplexer modules 2120 are multiplexed by the multiplexer 2130 and then input to the first WSS 2200 from the first common port 2210. For example, as shown in FIG. 7, a first multiplexer/demultiplexer module 2120-1 and a first multiplexer/demultiplexer module 2120-2 are respectively configured to obtain a first multiplexed signal and a second multiplexed signal. A wavelength adding resource pool signal is obtained through coupling of the first multiplexed signal and the second multiplexed signal by the multiplexer 2130, and the wavelength adding resource pool signal is input to the first WSS 2200 through the first common port 2210.

In a structure shown in FIG. 7, transmission of a signal obtained by each OTU 2110 is performed through the multiplexer 2130. Optionally, wavelengths of add wavelength signals obtained by all OTUs 2110 may be different, so that crosstalk between the different add wavelength signals is avoided.

The multiplexed signals input from the different first multiplexer/demultiplexer modules 2120 to the multiplexer 2130 include a plurality of add wavelength signals. Because the add wavelength signals need to be multiplexed by the multiplexer 2130, wavelengths of the add wavelength signals need to be different. In other words, in this structure, the wavelengths of the add wavelength signals from the different first multiplexer/demultiplexer modules 2120 are different.

Optionally, the first wavelength adding/dropping unit 2100 may alternatively include a plurality of multiplexers 2130. Each multiplexer 2130 corresponds to a plurality of first optical multiplexer/demultiplexer modules 2120 (different multiplexers 2130 correspond to different first optical multiplexer/demultiplexer modules 2120), and the different multiplexers 2130 are connected to the first WSS 2200 through different first common ports 2210.

Optionally, the multiplexer 2130 may be a coupler, a filter, an interleaver filter, or the like. This is not limited in this application.

In this embodiment of this application, the signals from the plurality of first multiplexer/demultiplexer modules 2120 are multiplexed by the multiplexer 2130 and then input to the first WSS 2200 from the same first common port 2210, and a quantity of occupied first common ports 2210 is small.

In this embodiment of this application, the first multiplexer/demultiplexer module 2120 may have different internal structure designs. Details are separately described below.
1. The first multiplexer/demultiplexer module 2120 includes a wavelength selective switch WSS.

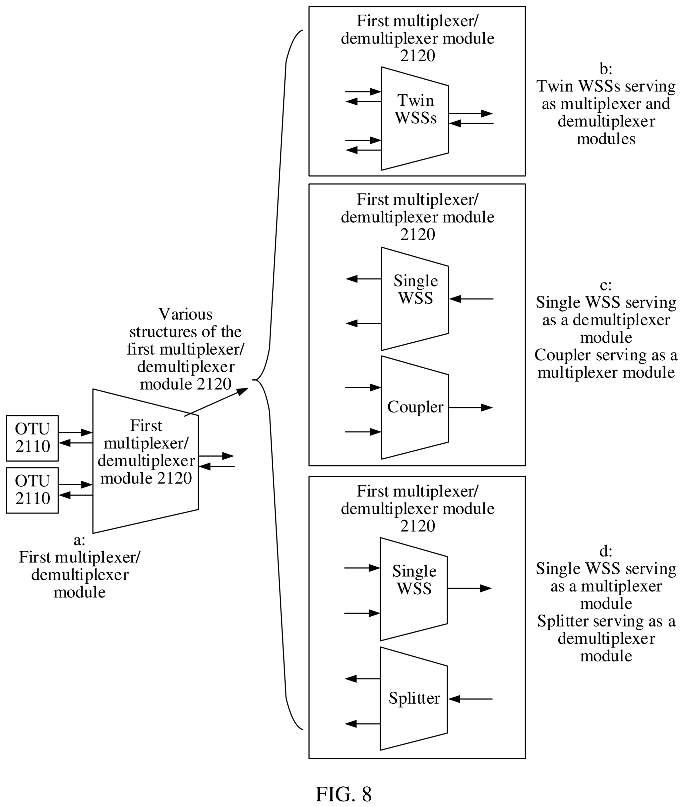

As shown in a in FIG. 8, the first multiplexer/demultiplexer module 2120 is not only configured to multiplex signals from different OTUs 2110, but also configured to demultiplex a signal from the first WSS 2200, so that demultiplexed signals are transmitted to the different OTUs 2110. Therefore, the first multiplexer/demultiplexer module 2120 may include a multiplexer module and a demultiplexer module.

Optionally, an internal structure of the first multiplexer/demultiplexer module 2120 may be implemented based on a WSS technology. For example, as shown in b in FIG. 8, the first multiplexer/demultiplexer module 2120 may include twin WSSs, where one of the WSSs serves as the multiplexer module, and the other WSS serves as the demultiplexer module.

Optionally, an internal structure of the first multiplexer/demultiplexer module 2120 may alternatively be implemented based on a WSS technology and a coupler technology. For example, as shown in c in FIG. 8, the first multiplexer/demultiplexer module 2120 may include a single WSS and a coupler (Coupler). The single WSS serves as the demultiplexer module, and the coupler (Coupler) serves as a multiplexer module. For example, as shown in d in FIG. 8, the first multiplexer/demultiplexer module 2120 may include a single WSS and a filter. The single WSS serves as the multiplexer module, and the filter Splitter serves as the demultiplexer module.

2. The first multiplexer/demultiplexer module 2120 includes an arrayed waveguide grating AWG.

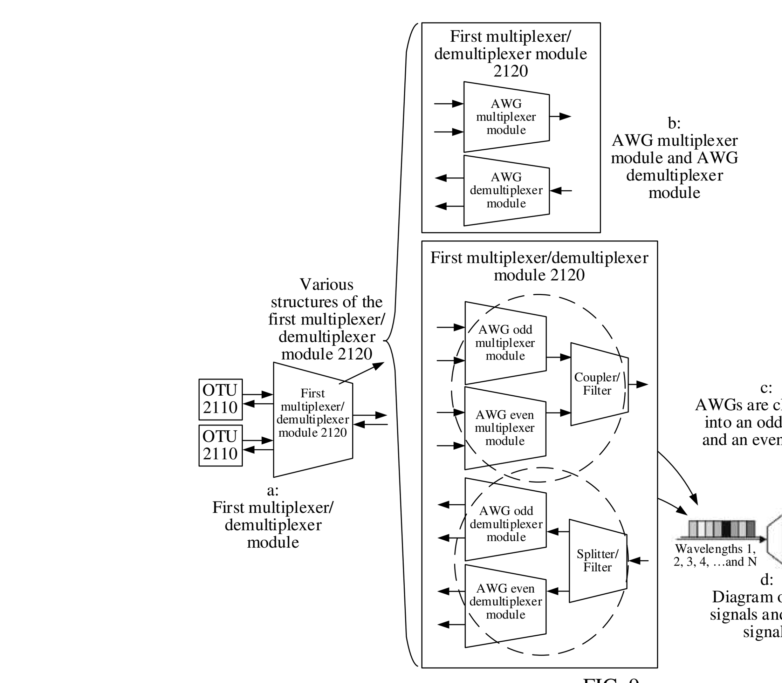

As shown in a in FIG. 9, the first multiplexer/demultiplexer module 2120 is not only configured to multiplex signals from different OTUs 2110, but also configured to demultiplex a signal from the first WSS 2200, so that demultiplexed signals are transmitted to the different OTUs 2110. Therefore, the first multiplexer/demultiplexer module 2120 may include a multiplexer module and a demultiplexer module.

Optionally, an internal structure of the first multiplexer/demultiplexer module 2120 may be implemented based on an AWG technology. For example, as shown in b in FIG. 9, the first multiplexer/demultiplexer module 2120 may include an AWG multiplexer module and an AWG demultiplexer module. Each pair of AWGs (including one AWG multiplexer module and one AWG demultiplexer module) occupies a pair of input and output ports of the first WSS 2200.

Optionally, signals may be classified into an odd signal and an even signal. An odd AWG module and an even AWG module in the first multiplexer/demultiplexer module 2120 are respectively configured to implement multiplexing/demultiplexing of the odd signal and the even signal. For example, as shown in d in FIG. 9, a splitter/filter may divide, based on a wavelength, the signal from the first WSS 2200 into a plurality of paths of signals of a wavelength 1 to a wavelength 2n. Signals of wavelengths 1, 3, ..., and 2n-1 are odd signals, and signals of wavelengths 2, 4, ..., and 2n are even signals.

As shown in c in FIG. 9, an AWG odd multiplexer module is configured to multiplex odd signals from the OTU 2110 to obtain an odd multiplexed signal; and an AWG even multiplexer module is configured to multiplex even signals from the OTU 2110 to obtain an even multiplexed signal. A coupler/filter is configured to multiplex the odd multiplexed signal and the even multiplexed signal.

As shown in c in FIG. 9, a splitter/filter, the AWG odd demultiplexer module, and the AWG even demultiplexer module are configured to classify the signal from the first WSS 2200 into an odd demultiplexed signal and an even demultiplexed signal. The demultiplexed signal is input to the AWG odd multiplexer module, and is transmitted to each odd OTU 2110 in a demultiplexing manner. The demultiplexed signal is input to the AWG even multiplexer module, and is transmitted to each even OTU 2110 in a demultiplexing manner.

Each pair of couplers (or filters used for multiplexing) and each pair of splitters (or filters used for demultiplexing) occupy a pair of input and output ports of the first WSS 2200.

3. The first multiplexer/demultiplexer module 2120 includes a coupler and a splitter.

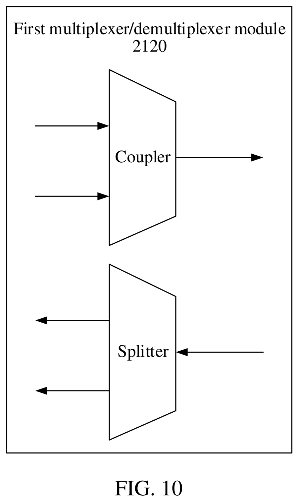

Optionally, an internal structure of the first multiplexer/demultiplexer module 2120 may be implemented based on a coupler technology. For example, as shown in FIG. 10, the first multiplexer/demultiplexer module 2120 may include the coupler Coupler and the splitter (Splitter). The coupler (Coupler) serves as a multiplexer module, and the splitter Splitter serves as a demultiplexer module.

Optionally, the first multiplexer/demultiplexer module 2120 may include one or more pairs of multiplexer and demultiplexer modules (including one coupler and one splitter). Each pair of multiplexer and demultiplexer modules (including one coupler and one splitter) occupies a pair of input and output ports of a first WSS 2200.

4. The first multiplexer/demultiplexer module 2120 includes an ADWSS.

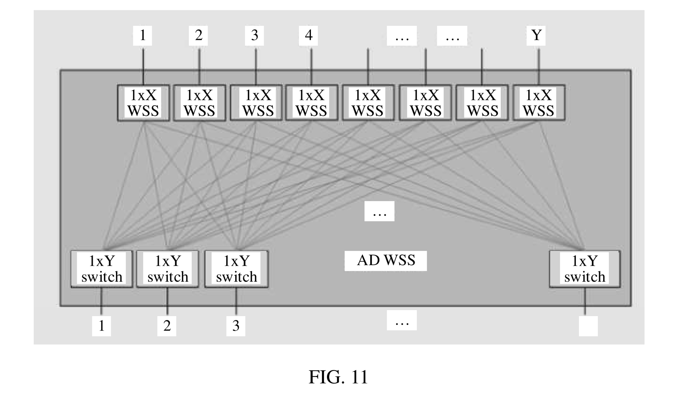

As shown in FIG. 11, the first multiplexer/demultiplexer module 2120 may include an Y*X WSS (namely, the ADWSS). The Y*X WSS is configured to connect to X OTUs 2110 and Y pairs of first common ports 2210.

Specifically, an X side of the Y*X WSS (ADWSS) includes X pairs of ports, the X pairs of ports are in one-to-one correspondence with the X OTUs 2110, and an OTU and an X port that correspond to each other are connected. A Y side of the Y*X WSS includes Y pairs of ports, the Y pairs of Y-side ports are in one-to-one correspondence with the Y pairs of first common ports 2210 of the first WSS 2200, and a first common port 2210 and a Y port that correspond to each other are connected.

Each pair of Y-side ports occupies a pair of input and output ports of the first WSS 2200.

The OTU connected to the X side may be output from any of the ports 1 to Y through the Y*X WSS. A signal of the first WSS connected to the Y side may be output from any of the ports 1 to X through the Y*X WSS. For any X port, wavelengths of signals input to different Y-side ports may be the same or may be different. This is not limited in this application. A maximum of Y (Y≤X) wavelength signals of a same frequency may be input or output in a Y*X WSS module.

5. The first multiplexer/demultiplexer module 2120 includes an MCS.

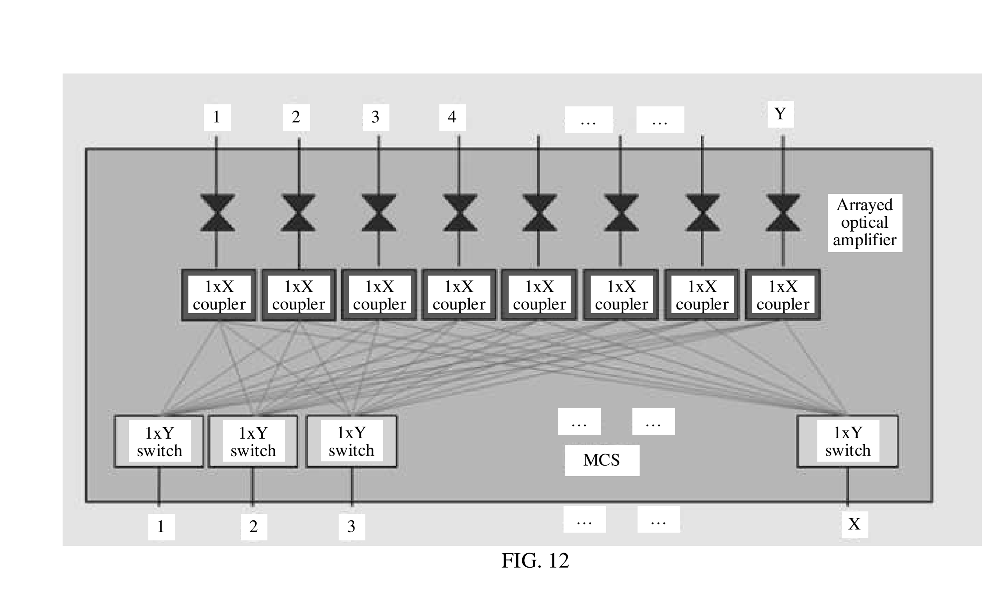

As shown in FIG. 12, the first multiplexer/demultiplexer module 2120 may include a multicast switch (multicast switch, MCS). X pairs of X-side ports of the MCS are configured to be connected to X OTUs 2110, and Y pairs of Y-side ports are configured to be connected to Y pairs of first common ports 2210.

Each pair of Y-side ports occupies a pair of input and output ports of a first WSS 2200.

An 1xX coupler connected to a Y side is configured to transmit a signal from a corresponding first common port 2210 (to be specific, a first common port 2210 connected to the 1xX coupler) to X 1xY switches, to transmit the signal to a corresponding X-side port. The 1xY switch connected to an X side is configured to transmit a signal from a corresponding OTU 2110 (to be specific, an OTU 2110 connected to the 1xY switch) to Y 1xX couplers, to transmit the signal to a corresponding Y-side port. For any 1xY switch, wavelengths of signals input to different Y-side ports may be the same or may be different. This is not limited in this application. A maximum of Y (Y≤X) wavelength signals of a same frequency may be input or output in a Y*X WSS module.

In embodiments shown in FIG. 2 to FIG. 12, integration of the communication device 2000 is improved based on structures of the first wavelength adding/dropping unit 2100 and the first WSS 2200. On the basis of the structures, a pass-through port may be further provided on the first WSS 2200, and pass-through scheduling of a plurality of CO ring signals is implemented by using the pass-through port, to further improve the integration of the communication device.

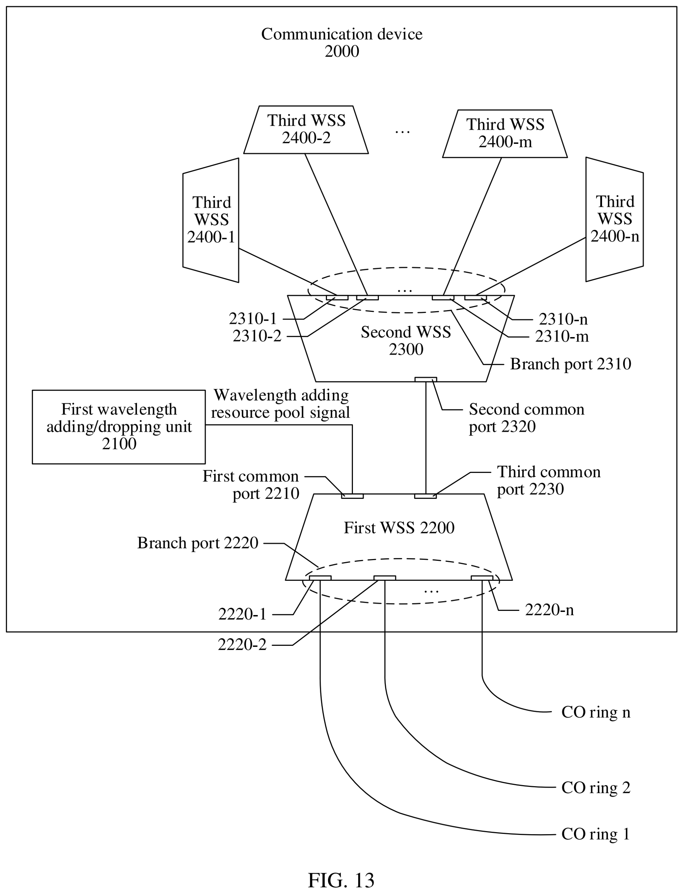

As shown in FIG. 13, the communication device 2000 may further include a second WSS 2300 and a plurality of third WSSs 2400 with different scheduling directions. In this embodiment of this application, the different scheduling directions mean that scheduling is performed to different line dimensions. For example, the communication device 2000 is an aggregation site communication device, and the second WSS 2300 and the plurality of third WSSs 2400 respectively transmit signals to other line dimensions for communication transmission.

The second WSS 2300 includes a plurality of branch ports 2310, and the plurality of branch ports 2310 are configured to be connected to different third WSSs 2400. For example, as shown in FIG. 13, branch ports 2310-1, 2310-2, 2310-m, and 2310-n are respectively connected to third WSSs 2400-1, 2400-2, 2400-m, and 2400-n. A second common port 2310 of the second WSS 2300 is connected to a third common port 2230 of a first WSS, and the third common port 2230 is a pass-through scheduling port connected to the second common port. In signals from the different third WSSs 2400, a pass-through signal is scheduled by the second WSS 2300 to the second common port 2310 as required, and is transmitted to the first WSS 2200 through the third common port 2230. The first WSS 2200 is configured to schedule different pass-through wavelength signals in the pass-through signal to a corresponding branch port 2220 based on a configuration.

In this embodiment of this application, the first WSS 2200 may schedule a wavelength adding resource pool signal and the pass-through signal based on the configuration.

For example, if the pass-through signal includes pass-through wavelength signals whose wavelengths are λ1 to λm, and the plurality of pass-through wavelength signals are input to the second WSS 2300 from a same second common port 2320, different pass-through wavelengths may be configured for different branch ports 2220, and a corresponding pass-through wavelength signal in the pass-through signal is scheduled to a port. For example, a pass-through wavelength λ1 may be configured for a branch port 2220-1, a pass-through wavelength λ2 may be configured for a branch port 2220-2, a pass-through wavelength λn may be configured for a branch port 2220-n, and a pass-through wavelength signal corresponding to a wavelength in the pass-through signal is scheduled to a corresponding branch port 2220.

Similarly, a signal from the first WSS 2200 enters a second common port 2320 through the third common port 2230, and is scheduled by the second WSS 2300 to different third WSSs 2400 as required, to be transmitted to different line dimensions. Details are not described herein.

In this embodiment of this application, signals from a first wavelength adding/dropping unit 2100 and the second WSS 2300 may be used as a resource pool for the first WSS 2200, and signals in the resource pool are uniformly scheduled. Specifically, signals from a plurality of CO rings may be selected by the first WSS 2200 for scheduling to the first wavelength-adding/dropping unit 2100 and/or the second WSS 2300 as required; and a signal from the first wavelength-adding/dropping unit 2100 and/or a signal from the second WSS 2300 may be selected by the first WSS 2200 for scheduling to a corresponding CO ring as required.

In this embodiment of this application, the second common port 2320 is connected to the third common port 2230, so that transmission of a pass-through signal from the second WSS 2300 to each CO ring (or a pass-through signal from each CO ring to the second WSS 2300) can be directly performed via the second common port 2320 and the third common port 2230. The pass-through signal from the second WSS 2300 does not need to be wavelength-dropped, at an OTU, and wavelength-added for transmission to each CO ring (or the pass-through signal from each CO ring is wavelength-dropped, at the OTU, and wavelength-added for transmission to the second WSS 2300), thereby avoiding a need of performing wavelength dropping on the pass-through signal at a local site and then performing wavelength adding, saving a quantity of OTUs, and reducing a transmission delay of the pass-through signal.

In addition, the quantity of OTUs required for performing wavelength adding/dropping on the pass-through signal is saved for direct pass-through, so that a quantity of OTUs in the communication device 2000 may be reduced, and structure complexity may be reduced. In addition, the plurality of CO rings share a pass-through port (the third common port 2230) through the first WSS 2200, so that the plurality of CO rings may share a pass-through signal from each third WSS 2400, and there is no need to independently set a pass-through port for each CO ring. This can reduce a quantity of pass-through ports and reduce fiber connection complexity, so that a structure of the communication device 2000 is simplified.

For signals input to the first WSS 2200, signals from a first common port 2210 and the third common port 2230 may include signals of a same wavelength, or may include signals of different wavelengths. This is not limited in this application. For example, a wavelength adding resource pool signal from the first common port 2210 includes add wavelength signals 1 to n, and the pass-through signal from the third common port 2230 includes pass-through wavelength signals m to k. A wavelength of the add wavelength signal 1 is the same as a wavelength of the pass-through wavelength signal m, and a wavelength of the add wavelength signal n is different from a wavelength of the pass-through wavelength signal k. This is not limited in this application.

Optionally, there may be one or more third common ports 2330. This is not limited in this application. For each third common port 2330, a pass-through signal input to the port may include a plurality of pass-through wavelength signals, and wavelengths of the plurality of pass-through wavelength signals are different. This helps the first WSS 2200 selects, for scheduling, the pass-through wavelength signal in the pass-through signal based on the wavelength, to avoid mutual interference between the pass-through wavelength signals.

If there are a plurality of third common ports 2330, the first WSS 2200 may separately schedule pass-through signals from different third common ports 2330. Optionally, there may be two third common ports 2330, four third common ports 2330, eight third common ports 2330, 16 third common ports 2330, 32 third common ports 2330, or the like. This is not limited in this application. The following describes a structure of the plurality of third common ports 2330 by using an example in which there are two third common ports 2330.

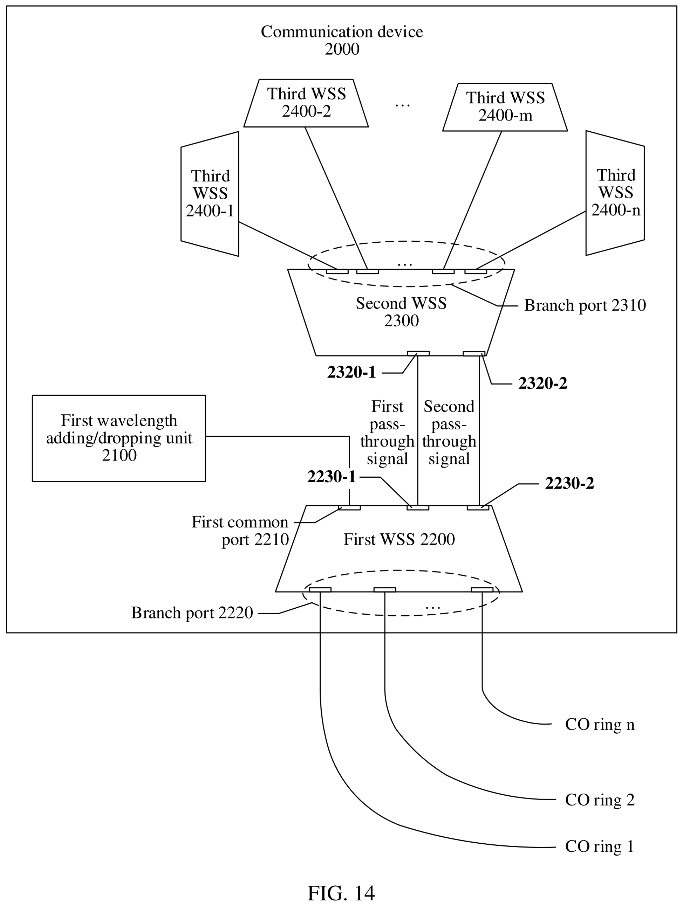

In this embodiment of this application, the second common port 2310 and the third common port 2330 have a same quantity and are in one-to-one correspondence. As shown in FIG. 14, a first WSS 2200 includes third common ports 2230-1 and 2230-2. Correspondingly, a second WSS 2300 includes second common ports 2320-1 and 2320-2. The second common port 2320-1 is connected to the third common port 2230-1, and the second common port 2320-2 is connected to the third common port 2230-2.

As shown in FIG. 14, pass-through signals include a first pass-through signal and a second pass-through signal. The first pass-through signal is from the third common port 2230-1 and includes pass-through wavelength signals 1 to n; and the second pass-through signal is from the third common port 2230-2 and includes pass-through wavelength signals m to k. In this case, the first WSS 2200 may schedule different pass-through wavelength signals in the first pass-through signal to corresponding branch ports based on a configuration, and schedule different pass-through wavelength signals in the second pass-through signal to corresponding branch ports based on the configuration. In the configuration, different pass-through wavelength signals in the first pass-through signal correspond to different branch ports, and different pass-through wavelength signals in the second pass-through signal correspond to different branch ports.

Because the first pass-through signal and the second pass-through signal are respectively input to the first WSS 2200 from the different third common ports 2230, the first WSS 2200 that performs wavelength-based scheduling may separately perform pass-through scheduling on the first pass-through signal and the second pass-through signal, and the scheduling does not affect each other. Therefore, wavelength distribution of the first pass-through signal and wavelength distribution of the second pass-through signal (of the pass-through wavelength signals) are independent of each other and do not affect each other.

Specifically, pass-through wavelength signals from different third common ports 2230 may include pass-through wavelength signals of a same wavelength, or may include pass-through wavelength signals of different wavelengths. This is not limited in this application. For example, the first pass-through signal from the third common port 2230-1 includes the pass-through wavelength signals 1 to n, and the second pass-through signal from the third common port 2230-2 includes the pass-through wavelength signals m to k. A wavelength of the pass-through wavelength signal 1 is the same as a wavelength of the pass-through wavelength signal m, and a wavelength of the pass-through wavelength signal n is different from a wavelength of the pass-through wavelength signal k. This is not limited in this application.

In this embodiment of this application, provided that in a network setting process, it is ensured that wavelengths of signals input to a same branch port 2220 are different (to be specific, the wavelengths of the signals input to the same branch port 2220 through different third common ports 2230 are different), interference between the signals is not caused.

For example, the first pass-through signal may include pass-through wavelength signals 1 to 3, which are respectively used for carrying an audio signal 1, a video signal 1, and a call signal 1; and the second pass-through signal includes pass-through wavelength signals 4 to 6, which are respectively used for carrying a video signal 2, a video signal 3, and an image signal 1. If it is determined that the pass-through wavelength signal 1 (carrying the audio signal 1) and a pass-through wavelength signal 4 (carrying the video signal 2) are to be scheduled to a same CO ring (branch port 2220), in the network setting process, a wavelength of the pass-through wavelength signal 1 and a wavelength of the pass-through wavelength signal 4 should be set to be different.

In this embodiment of this application, wavelengths of the pass-through wavelength signals from different third common ports 2230 are independent of each other (wavelength allocation of the different third common ports does not affect each other), and a wavelength of a pass-through wavelength signal from each third common port 2230 may be flexibly set. This improves flexibility of wavelength configuration in a network.

Optionally, for any third common port 2230, a pass-through signal input to the third common port 2230 may alternatively include only one pass-through wavelength signal. This is not limited in this application.

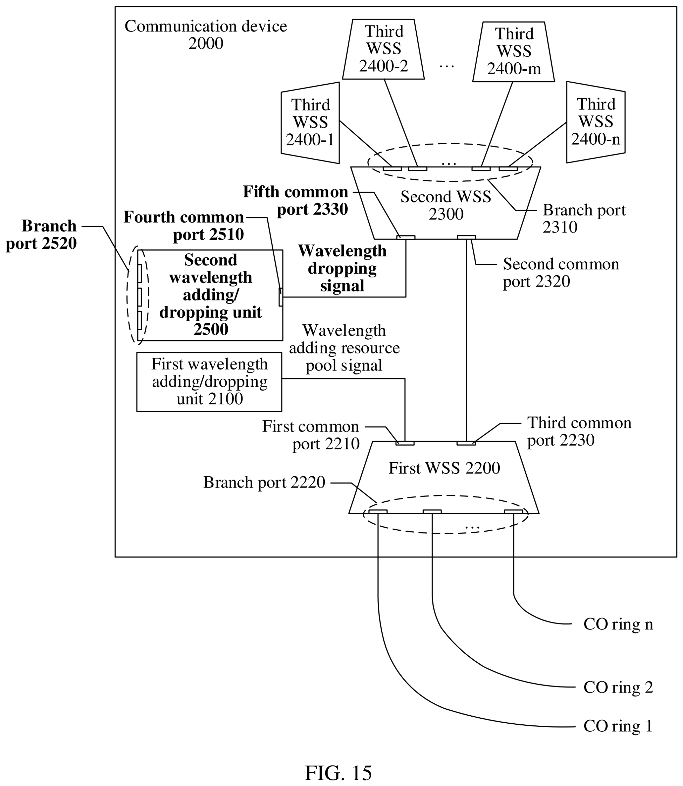

In this embodiment of this application, signal wavelength-dropping may alternatively be implemented by the second WSS 2300. As shown in FIG. 15, a communication device 2000 may further include a second wavelength adding/dropping unit 2500. The second wavelength adding/dropping unit 2500 includes a fourth common port 2510 and a plurality of branch ports 2520. The fourth common port 2510 is connected to a fifth common port 2330 of a second WSS 2300.

Signals from different third WSSs 2400 include a wavelength dropping signal, the wavelength dropping signal is input to the second wavelength adding/dropping unit 2500 through the fifth common port 2330 and the fourth common port 2510, and the second wavelength adding/dropping unit 2500 is configured to: divide the wavelength dropping signal into a plurality of paths of signals, and transmit different paths of wavelength dropping signals through different branch ports 2520. Optionally, the second wavelength adding/dropping unit 2500 may convert the different paths of wavelength dropping signals into electrical signals (that is, perform wavelength dropping), to output corresponding electrical signals through the different branch ports 2520.

Optionally, the communication device 2000 may include one or more second wavelength adding/dropping units 2500, and each second wavelength adding/dropping unit 2500 may include one or more pairs of ports connected to the fifth common port of the second WSS. For a specific structure, refer to the foregoing descriptions of the first wavelength adding/dropping unit, and details are not described herein.

For signal transmission in a wavelength adding direction from the second wavelength adding/dropping unit 2500 to the second WSS 2300, refer to the foregoing descriptions of the wavelength dropping direction. Details are not described herein.

In this embodiment of this application, signals from a plurality of third WSSs 2400 may be selected by the second WSS 2300 for scheduling to the second wavelength adding/dropping unit 2500 and/or a first WSS 2200 as required, and a signal from the second wavelength adding/dropping unit 2500 and/or a signal from the first WSS 2200 may be selected by the second WSS 2300 for scheduling to a corresponding third WSS 2400 as required, to be transmitted to different line dimensions.

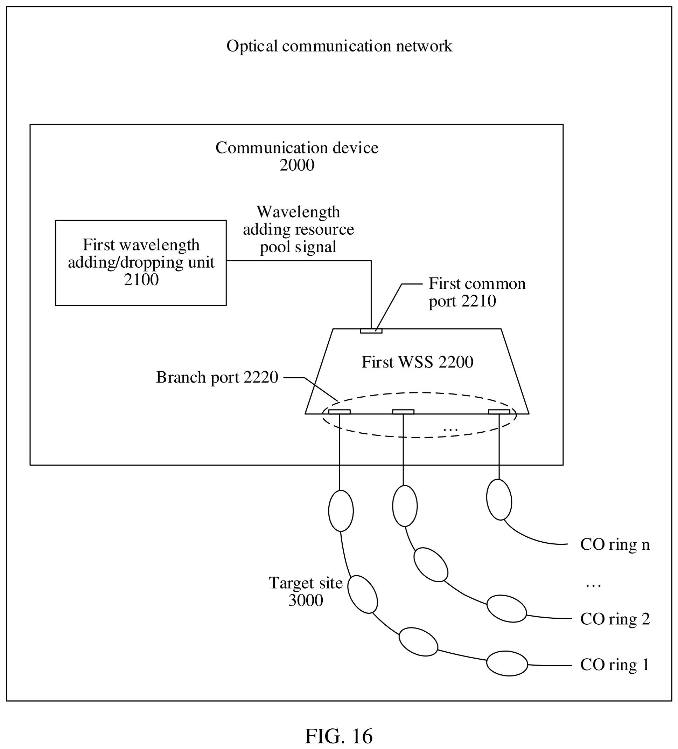

An embodiment of this application further provides an optical communication network. As shown in FIG. 16, the network includes a communication device 2000 and a plurality of CO rings. The communication device 2000 is the communication device 2000 described in any one of the foregoing embodiments in FIG. 2 to FIG. 15. The plurality of CO rings are connected to different branch ports 2220 of a first WSS 2200 in the communication device 2000.

The plurality of CO rings include a plurality of sites (represented by ellipses in the figure), which are configured to implement wavelength adding/dropping of CO ring signals. The plurality of sites include at least one target site 3000, where the target site 3000 is configured to: perform local wavelength dropping on a signal from a previous site, and/or pass through the signal to a next site. In this embodiment of this application, the target site 3000 has a plurality of structures. Details are separately described below.
1. The target site 3000 includes a splitter and a coupler.

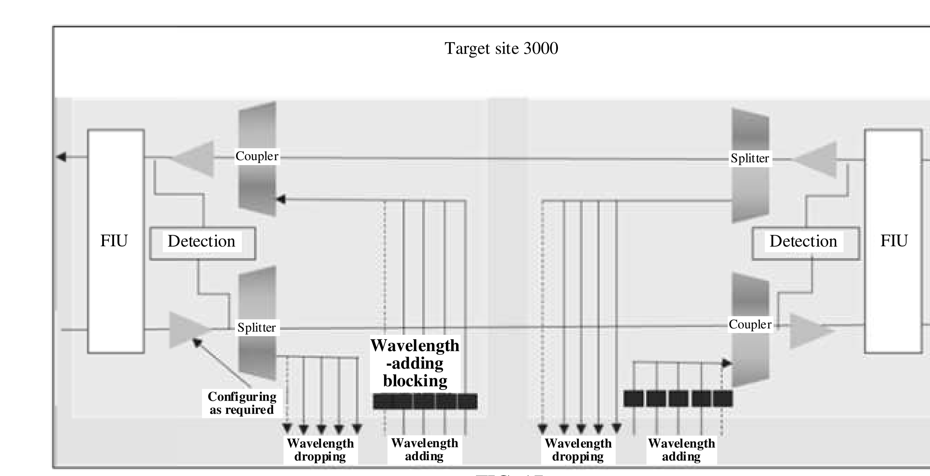

The target site 3000 may include a wavelength dropping unit and a wavelength adding unit, which are respectively configured to implement wavelength dropping and wavelength adding of a signal. As shown in FIG. 17, the wavelength dropping unit of the target site 3000 may be the splitter (splitter), and the wavelength adding unit may be the coupler (coupler).

Optionally, the coupler Coupler may be an N-1 coupler, and supports combining N WDM wavelengths into one optical port for output. For this structure, the wavelength adding of the signal may be controlled by blocking signal transmission at a wavelength adding port. This is referred to as a wavelength-adding blocking function in this application.

Optionally, the splitter Splitter may be a 1-N splitter, and may split a multiplexed signal into N paths of signals, where the N paths of signals are output through one port separately.

Optionally, an even or uneven architecture may be used for the coupler Coupler and the splitter Splitter. This is not limited in this application.

Optionally, the target site 3000 may be a colorless (Colorless) wavelength-adding/dropping site, or may be a gridless (Gridless) wavelength-adding/dropping site. This is not limited in this application.

Optionally, the target site 3000 may further include an optical amplifier, and a location of the optical amplifier and a quantity of optical amplifiers are configured as required.

2. The target site 3000 includes a cascaded filter unit.

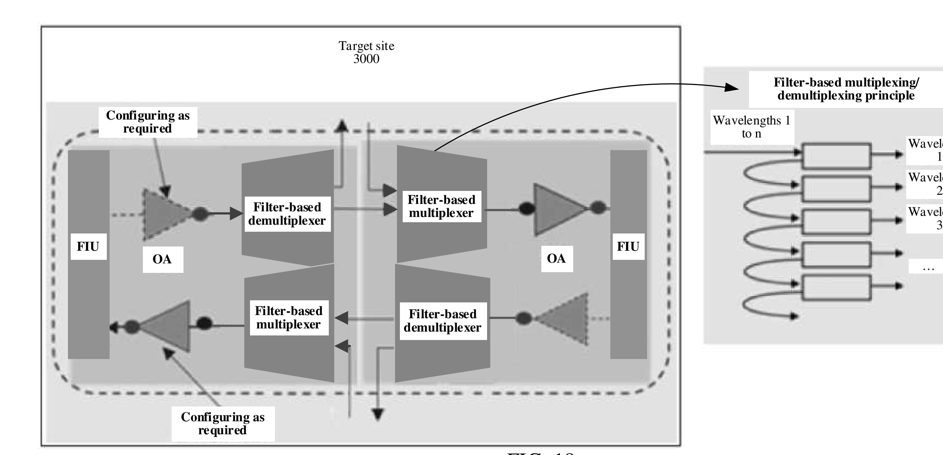

As shown in FIG. 18, a wavelength dropping unit and a wavelength adding unit of the target site 3000 may be cascaded filter units (that is, filters connected in series stages).

Optionally, the wavelength adding unit of the target site 3000 may be a multiplexer (multiplexer, MUX) module formed based on a filter function, and the wavelength dropping unit may be a demultiplexer (demultiplexer, DEMUX) module formed based on a filter function.

Optionally, for this structure, colored adding for a fixed wavelength may be implemented at a wavelength adding port, so that multiplexing is performed with a signal of another wavelength for transmission. Wavelength dropping for a fixed wavelength may be implemented at a wavelength dropping port. A remaining wavelength signal on which wavelength dropping is not performed can pass through to a next site.

There may be a plurality of wavelength adding ports and a plurality of wavelength dropping ports in this structure. This is not limited in this application. Optionally, the target site 3000 may be a colored (Colored) adding/dropping site. Optionally, a channel spacing between wavelengths may be 100 GHz.

3. The target site 3000 includes an optical add-drop multiplexer.

Optionally, a wavelength adding unit and a wavelength dropping unit of the target site 3000 may be optical add-drop multiplexers (optical add-drop multiplexers, OADMs). The OADM in the target site may have different forms. Details are separately described below.

3.1. The OADM in the target site 3000 is an FOADM.

Optionally, a wavelength adding/dropping unit in the target site 3000 may be the fixed optical add/drop multiplexer (fixed optical add/drop multiplexer, FOADM), and the wavelength adding unit and the wavelength dropping unit may be specifically arrayed waveguide gratings (arrayed waveguide gratings, AWGs).

3.2. The OADM in the target site 3000 is an ROADM.

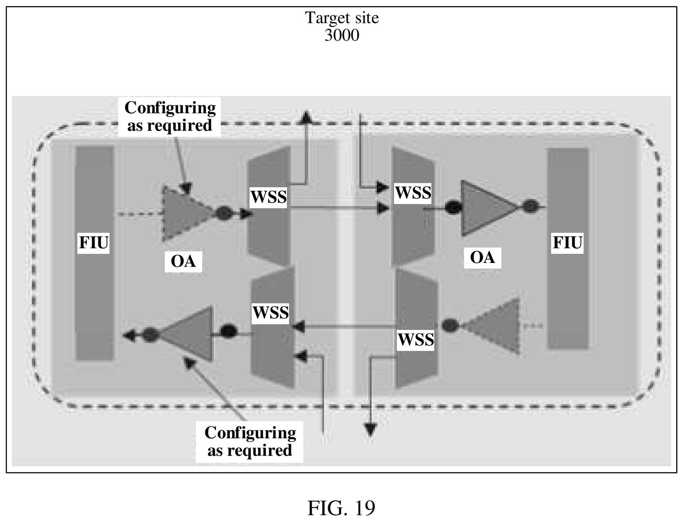

Optionally, a wavelength adding/dropping unit in the target site 3000 may be a reconfigurable optical add/drop multiplexer (reconfigurable optical add/drop multiplexer, ROADM). As shown in FIG. 19, the wavelength adding unit and the wavelength dropping unit may be specifically wavelength selective switches (wavelength selective switches, WSSs).

Optionally, technologies of micro-electro-mechanical systems (micro-electro-mechanical systems, MEMS), a laser diode (laser diode, LC), a liquid crystal on silicon (liquid crystal on silicon, LCOS), or the like may be used for the WSS in the target site 3000. This is not limited in this application.

In the WSS in the target site 3000, a wavelength adding signal/wavelength dropping signal of any wavelength may be selected for each wavelength adding/dropping optical port, and a signal of a remaining wavelength directly passes through to a downstream site. Optionally, the wavelength adding/dropping optical port may support a plurality of paths of signals, for example, support 4 to 32 paths of signals of different wavelengths.

Optionally, the wavelength adding/dropping unit may be Twin WSSs, or may be a single WSS+a multiplexer. This is not limited in this application.

Optionally, the target site 3000 may be a colorless (Colorless) wavelength-adding/dropping site, or may be a gridless (Gridless) wavelength-adding/dropping site. This is not limited in this application.

Optionally, the target site 3000 may further include an optical amplifier, and a location of the optical amplifier and a quantity of optical amplifiers are configured as required.

3.3. The OADM in the target site 3000 is a COADM.

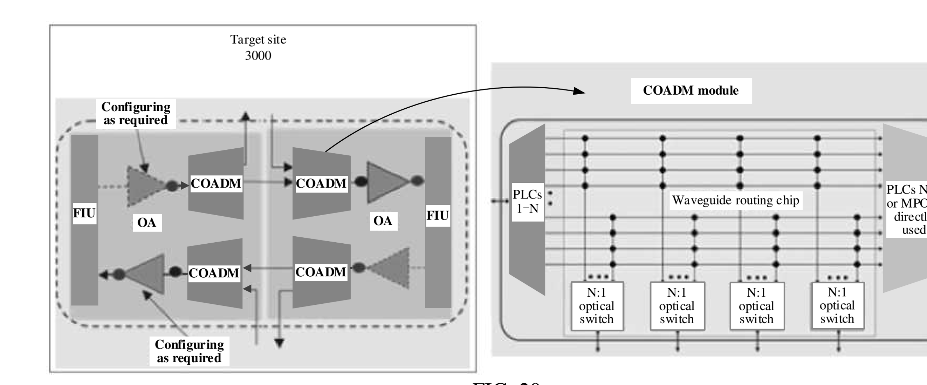

Optionally, a wavelength adding/dropping unit in the target site 3000 may be a colorless optical add/drop multiplexer (colorless optical add/drop multiplexer, COADM). For specific structures of a wavelength adding unit and a wavelength dropping unit, refer to FIG. 20.

As shown in FIG. 20, the wavelength adding/dropping unit in the target site 3000 may be a wavelength adding/dropping functional module integrated based on a PLC+a routing chip, which is referred to as a COADM module for short. The PLC in the figure may be an AWG, and an Nx1 optical switch determines whether an optical path between two PLCs is connected or disconnected, to implement selection between connection and disconnection of a wavelength adding/dropping channel, and implement control and scheduling of wavelength adding/dropping.

An AWG+MZ (Mach-Zehnder interferometer, Mach-Zehnder interferometer) structure-based switch chip technology with a PLC technology is used for the COADM. A wavelength adding signal/wavelength dropping signal of any wavelength may be selected for each wavelength adding/dropping optical port, and a signal of a remaining wavelength directly passes through to a downstream site. Optionally, the wavelength adding/dropping optical port may support a plurality of paths of signals, for example, support 4 to 32 paths of signals of different wavelengths.

Optionally, the target site 3000 may be a colorless (Colorless) wavelength-adding/dropping site, or may be a gridless (Gridless) wavelength-adding/dropping site. This is not limited in this application.

Optionally, a channel spacing of the target site 3000 may be fixed, and the channel spacing may be determined by the PLC (for example, may be 100 GHz, 150 GHz, or 200 GHz, and this is not limited in this application).

Optionally, the target site 3000 may further include an optical amplifier, and a location of the optical amplifier and a quantity of optical amplifiers are configured as required.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A communication device, comprising a first wavelength adding/dropping unit and a first wavelength selective switch WSS, wherein
the first wavelength adding/dropping unit is connected to a first common port of the first WSS, and a wavelength adding resource pool signal from the first wavelength adding/dropping unit is input to the first WSS through the first common port;
the first WSS comprises a plurality of branch ports, and the first WSS is configured to schedule different add wavelength signals in the wavelength adding resource pool signal to corresponding branch ports based on a configuration, wherein in the configuration, different add wavelength signals correspond to different branch ports; and
the plurality of branch ports are in one-to-one correspondence with a plurality of central office CO site rings, and are configured to transmit corresponding add wavelength signals to the corresponding CO rings.

2. The device according to claim 1, wherein there are a plurality of first common ports, and in the wavelength adding resource pool signal, a first multiplexed signal and a second multiplexed signal are from different first common ports; and
the first WSS is configured to: schedule different add wavelength signals in the first multiplexed signal to corresponding branch ports based on the configuration; and schedule different add wavelength signals in the second multiplexed signal to corresponding branch ports based on the configuration.

3. The device according to claim 1 or 2, wherein the first wavelength adding/dropping unit comprises:
a plurality of optical channel transport unit OTUs, separately configured to obtain an add wavelength signal; and
at least one first multiplexer/demultiplexer module, configured to multiplex add wavelength signals from the plurality of OTUs to obtain the wavelength adding resource pool signal.

4. The device according to claim 3, wherein the plurality of OTUs are configured to obtain the add wavelength signals of different wavelengths, and the first multiplexer/demultiplexer module is configured to multiplex the add wavelength signals of different wavelengths to obtain the wavelength adding resource pool signal.

5. The device according to claim 3 or 4, wherein the first multiplexer/demultiplexer module comprises a first output port and a second output port, there are a plurality of first common ports, and the first output port and the second output port are respectively connected to different first common ports.

6. The device according to claim 5, wherein in the plurality of add wavelength signals obtained by the plurality of OTUs, a wavelength of a first add wavelength signal is the same as a wavelength of a second add wavelength signal; and
the first add wavelength signal is input to the first WSS through the first output port, and the second add wavelength signal is input to the first WSS through the second output port.

7. The device according to any one of claims 3 to 6, wherein the at least one first multiplexer/demultiplexer module comprises a plurality of first multiplexer/demultiplexer modules, each first multiplexer/demultiplexer module is configured to obtain one path of multiplexed signal, and multiplexed signals from different first multiplexer/demultiplexer modules are separately input to the first WSS through different first common ports.

8. The device according to claim 3 or 4, wherein the first wavelength adding/dropping unit further comprises a multiplexer, the at least one first multiplexer/demultiplexer module comprises a plurality of first multiplexer/demultiplexer modules, each first multiplexer/demultiplexer module is configured to obtain one path of multiplexed signal, and multiplexed signals from different first multiplexer/demultiplexer modules are multiplexed by the multiplexer and then input to the first WSS from one first common port.

9. The device according to any one of claims 1 to 8, wherein the first WSS is configured to schedule, to different branch ports based on allocation of a control module, signals that are of a same wavelength and that are from different first common ports.

10. The device according to any one of claims 1 to 9, wherein the device further comprises a second WSS and a plurality of third WSSs with different scheduling directions;
a plurality of branch ports of the second WSS are configured to be connected to different third WSSs, at least one second common port of the second WSS is connected to at least one third common port of the first WSS, and the second common port and the third common port have a same quantity and are in one-to-one correspondence;
in signals from the different third WSSs, a pass-through signal is scheduled by the second WSS to the second common port, and is transmitted to the first WSS; and
the first WSS is configured to schedule different pass-through wavelength signals in the pass-through signal to corresponding branch ports based on the configuration, and in the configuration, different pass-through wavelength signals correspond to different branch ports.

11. The device according to claim 10, wherein there is at least one third common port, the pass-through signal input to any third common port comprises a plurality of pass-through wavelength signals, and wavelengths of the plurality of pass-through wavelength signals are different.

12. The device according to claim 10 or 11, wherein there are a plurality of third common ports, and in the pass-through signals, a first pass-through signal and a second pass-through signal are from different second common ports; and
the first WSS is configured to: schedule different pass-through wavelength signals in the first pass-through signal to corresponding branch ports based on the configuration; and schedule different pass-through wavelength signals in the second pass-through signal to corresponding branch ports based on the configuration.

13. The device according to any one of claims 10 to 12, wherein the device further comprises a second wavelength adding/dropping unit;
a fourth common port of the second wavelength adding/dropping unit is connected to a fifth common port of the second WSS; and
the signals from the different third WSSs comprise a wavelength dropping signal, the wavelength dropping signal is input to the second wavelength adding/dropping unit through the fifth common port and the fourth common port, and the second wavelength adding/dropping unit is configured to: divide the wavelength dropping signal into a plurality of paths of signals, and transmit different paths of wavelength dropping signals through different branch ports.

14. An optical communication network, comprising the communication device according to any one of claims 1 to 13, and a plurality of central office CO site rings, wherein the plurality of CO rings are connected to different branch ports of the first WSS in the communication device, and the plurality of CO rings comprise at least one target site.

15. The network according to claim 14, wherein a wavelength dropping unit of the target site is a splitter, and a wavelength adding unit of the target site is a coupler.

16. The network according to claim 14, wherein both a wavelength adding unit and a wavelength dropping unit of the target site are cascaded filter units.

17. The network according to claim 14, wherein a wavelength adding unit and a wavelength dropping unit of the target site are optical add-drop multiplexers OADM.
